# EUROPÄISCHE PATENTSCHRIFT

(11) **EP 1 556 236 B1**
(45) Veröffentlichungstag und Bekanntmachung des Hinweises auf die Patenterteilung: **19.01.2011**
(21) Anmeldenummer: 03809245.8
(22) Anmeldetag: 17.10.2003
(51) Int. Cl.: B60J 7/057

(54) **KRAFTFAHRZEUG MIT EINEM FAHRBAREN VERDECK**
MOTOR VEHICLE WITH A MOVING HOOD
VEHICULE A MOTEUR POURVU D'UNE CAPOTE MOBILE

(30) Priorität: 18.10.2002 DE 10248762
(43) Veröffentlichungstag der Anmeldung: 27.07.2005
(73) Patentinhaber: Wilhelm Karmann GmbH, 49084 Osnabrück (DE)
(72) Erfinder: GUTENDORF, Peter, 49088 Osnabrück (DE); HINRICHS, Reiner, 49090 Osnabrück (DE); JAHN, Jörg, 32257 Bünde (DE)
(74) Vertreter: Kronthaler, Schmidt & Coll.
(86) Internationale Anmeldenummer: PCT/DE2003/003442
(87) Internationale Veröffentlichungsnummer: WO 2004/037580

(56) Entgegenhaltungen:
- EP-A- 1 354 740
- US-A1- 2002 121 872

## Beschreibung

Die Erfindung betrifft ein Kraftfahrzeug mit einem fahrbaren Verdeck, mit einer Steuereinrichtung zur Steuerung einer Verdeckbewegung und einer Detektionseinrichtung zur Erkennung eines Eingriffs in einen Bewegungsraum eines Verdeckmechanismus.

Cabriolet-Kraftfahrzeuge neuerer Bauart weisen häufig ein fahrbares Verdeck auf, welches beispielsweise durch eine Tasterbetätigung automatisch von einer geöffneten in eine geschlossene Position oder umgekehrt bewegt werden kann. Die Verdeckbewegung erfolgt dabei üblicherweise durch einen hydraulischen Antrieb, welcher einen Verdeckmechanismus antreibt, der ein Verdeckgestänge, unter dem vorliegend sowohl eine Trageinrichtung für ein Textildach als auch ein sogenanntes Hard-Top-Klappdach mit im wesentlichen starren Dachelementen zu verstehen ist, und gegebenenfalls einen Deckel für einen Verdeckaufnahmeraum sowie alle hierdurch bewegten Elemente umfaßt.

Da Störungen im Ablauf der Verdeckbewegung, wie z.B. eine verlangsamte Bewegung oder ein Blockieren des Verdecks, Anzeichen für das Einklemmen eines Gegenstandes oder eines menschlichen Körperteils in das Verdeckgestänge sein können, und eine solche Einklemmsituation eine sofortige Reaktion zur Vermeidung von Verletzungen erfordert, ist es bekannt, eine Detektionseinrichtung zur Erkennung eines Eingriffs in den Bewegungsraum des Verdeckmechanismus vorzusehen.

Aus der EP 0 943 473 A2 ist ein Kraftfahrzeug mit einem von einer Verdecksteuerung mittels eines Antriebs fahrbaren Verdeck bekannt, wobei insbesondere als Kamera ausgebildete Sensoren zur Ermittlung der Position der Fahrzeuginsassen in einem Fahrzeuginnenraum vorgesehen sind. Die Sensoren, welche oberhalb der Fahrzeuginsassen angebracht sind, überwachen neben der Position der Fahrzeuginsassen auf ihren Sitzen einen Sicherheitsbereich zwischen den Fahrzeuginsassen und dem Verdeck und sind mit einer Verdecksteuerung verbunden. Sobald die Verdecksteuerung ermittelt, daß die Fahrzeuginsassen einen Sicherheitsbereich unterhalb des Verdecks nicht einhalten und Verletzungen der Fahrzeuginsassen durch das sich bewegende Verdeck somit nicht ausgeschlossen sind, wird der Antrieb des Verdecks stillgesetzt.

Die bei der EP 0 943 473 A2 vorgesehenen Sensoren, welche eine Kamera, ein Infrarotsensor oder ein Ultraschallsensor sein können, haben den Nachteil, daß sie bezüglich ihrer Signale häufig fehlerbehaftet sind und im Falle optischer Sensoren in einem optischen Schattenbereich liegende Zonen nicht überwachen können.

In der deutschen Offenlegungsschrift 197 23 974 A1 wird ebenfalls ein Verfahren zum Verhindern des Einklemmens eines Fremdkörpers in einer durch eine motorisch angetriebene Einrichtung zu verschließende Öffnung beschrieben, welche mit einer optoelektronischen Sensorik arbeitet. Bei Erfassen eines in der zu schließenden Öffnung befindlichen Fremdkörpers wird durch einen Detektorstrahl die motorisch angetriebene Einrichtung abgeschaltet oder in einen Reversierbetrieb geschaltet. Die Richtung des Detektorstrahls wird dabei kontinuierlich so verändert, daß der Detektorstrahl über den Bereich der Schließkante der zu verschließenden Öffnung wandert.

Ein solcher Einklemmschutz ist jedoch bei einem fahrbaren Verdeck eines Cabriolet-Fahrzeuges nur mit erheblichem Aufwand zu realisieren und bietet bei Fehlern oder einem Ausfall keinen Schutz vor Verletzungen.

In der Praxis hat es sich gezeigt, daß eine Detektion von Hindernissen mit hinreichender Genauigkeit mittels einer kapazitiven Sensoreinrichtung möglich ist.

Ein solcher Einklemmschutz mit einer kapazitiven Sensorik wird in der deutschen Offenlegungsschrift DE 198 36 056 A1 beschrieben, wobei eine Anordnung zur Detektion von Hindernissen, insbesondere beim automatischen Schließen von Cabriolet-Verdecken, Kraftfahrzeug-Fenstern oder dergleichen, eine kapazitive Sensoreinrichtung umfaßt, bestehend aus einer elektrisch leitenden Senderfläche auf der einen Seite und einem elektrisch leitenden Sensordraht und mindestens einer im wesentlichen potentialfreien Metallfläche auf der anderen Seite eines Isolators. Die Senderfläche und der Sensordraht sind dabei an eine Auswerte-Schaltung angeschlossen.

Derartige mit einer kapazitiven Sensorik arbeitende Einklemmschutzeinrichtungen haben jedoch genauso wie andere, aus der Praxis bekannte Einklemmschutzeinrichtungen mit Drucksensoren den Nachteil, daß sie eine Einklemmsituation erst sehr spät, bei Drucksensoren erst bei Kontakt mit dem in den Bewegungsablauf eingreifenden Objekt, reagieren.

Die gattungsgemäße US 2002/121872 A1 offenbart ein System zum Einklemmschutz bei einem beweglichen Plattenelement wie einem Schiebedach oder einem Seitenfenster eines Kraftfahrzeuges, wobei optische Sensoren und zusätzlich eine Messung des Motorstroms als Redundanz genutzt werden, um eine Einklemmsituation zu erkennen. Bei Erkennen eines Hindernisses wird der das bewegliche Plattenelement antreibende Motor gestoppt.

Ein längeres Stoppen des Motors ist in bestimmten Betriebssituationen im Bewegungsablauf eines Verdecks eines Cabriolet-Fahrzeuges bei keinem schwerwiegenden Eingriff in den Bewegungsraum gegebenenfalls nicht nur unnötig, sondern kann sogar gefährlich sein, z. B. wenn der Verdeckablauf während eines Fahrbetriebes des Fahrzeuges gestoppt wird, weshalb eine Anwendung dieser bekannten Lösung bei einem Verdeck eines Cabriolet-Fahrzeuges problematisch ist.

Es ist die Aufgabe der vorliegenden Erfindung, ein Kraftfahrzeug mit einem automatisiert fahrbaren Verdeck bereitzustellen, bei dem eine Störung der Sensorik oder ein Eingriff in einen Bewegungsraum eines Verdeckmechanismus sicher und möglichst frühzeitig erkannt wird und in jeder Betriebssituation eine automatische Verdeckbewegung ohne eine Verletzung von menschlichen Körperteilen oder eine Beschädigung von Bauteilen erfolgt.

Diese Aufgabe wird gelöst gemäß den Merkmalen des Patentanspruches 1.

Die erfindungsgemäße Lösung hat den Vorteil, daß durch die Verwendung verschiedener Sensorsysteme auch noch ein Einklemmschutz gewährleistet ist, wenn eine nach einem bestimmten Meßprinzip arbeitende Sensorik gestört ist oder eine Einklemmsituation nicht oder nicht rechtzeitig erkennt. Der Übergang in den Sicherheitsmodus bei der Ansteuerung des Verdeckmechanismus, unter dem vorliegend ein Verdeckgestänge und gegebenenfalls ein Verdeckaufnahmeraumdeckel mit zugehörigen bewegten Elementen verstanden wird, gewährleistet dabei eine der jeweiligen Betriebssituation angepaßte Reaktion, welche in einem Fortfahren der Verdeckbewegung mit reduzierter Geschwindigkeit oder einem Stoppen oder Reversieren der Verdeckbewegung bestehen kann.

Wenn ein Teil der Sensoren eine optische Sensorik bildet, ist eine frühzeitige Erkennung einer Einklemmsituation möglich, bevor das in den Bewegungsraum des Verdeckmechanismus eingreifende Objekt in Kontakt mit dem Verdeckmechanismus gerät.

Hierbei können vorteilhafterweise gegebenenfalls bereits vorhandene optische Sensoren zur Anwendung kommen, welche beispielsweise zur Erkennung der Insassenposition zur Steuerung von Sicherheitssystemen wie einem Airbag vorhanden sind. Solche beispielsweise in den deutschen Offenlegungsschriften DE 198 14 691 A1 und DE 199 32 520 A1 beschriebenen Vorrichtungen zur Erfassung der Position von Objekten und/oder Personen im Innenraum eines Kraftfahrzeuges können somit einer weiteren Funktion zugeführt werden.

Die optische Sensorik kann in einer vorteilhaften Ausführung mit einer optischen Lichtsende- und Empfangseinrichtung ausgebildet sein, welche um den Bewegungsraum des Verdecks wenigstens eine Detektionsebene bildet und einen Eingriff in die Detektionsebene durch Reflexionserkennungsmittel detektiert.

Unter dem Begriff "Licht" ist im vorliegenden Sinn nicht nur der für das menschliche Auge sichtbare Bereich der von einer Strahlungsquelle ausgehenden elektromagnetischen Strahlung, sondern auch der für das menschliche Auge nicht sichtbare Bereich der optischen Strahlung, der auch die Infrarotstrahlung, die Ultraviolettstrahlung, die Röntgenstrahlung und Mikrowellenstrahlung umfaßt, zu verstehen. Insbesondere die Verwendung der Mikrowellenstrahlung stellt dabei eine vorteilhafte Alternative zu der Verwendung von sichtbarem Licht bei der Erfindung dar.

Alternativ oder ergänzend kann es in einer weiteren vorteilhaften Ausführung der Erfindung auch vorgesehen sein, daß die optische Sensorik mit Bildsensoren ausgebildet ist. Dabei kann ein Fahrzeuginnenraum bzw. Fahrgastraum durch mindestens einen in diesen gerichteten optischen Sensor, wie z. B. eine Kamera oder einen Photosensor gemäß der EP 0 943 473 A2, erfaßt werden, wobei in einer Auswerteeinheit anhand der von dem optischen Sensor gelieferten Ausgangssignale der Bewegungsbereich und die Bewegung des Verdecks überwacht wird.

Als weitere nach einem anderen Meßprinzip arbeitende Sensoren der Sensorik können beispielsweise Ultraschallsensoren, Drucksensoren oder kapazitive Sensoren Anwendung finden.

Bevorzugt wird ein Teil der Sensorik der Detektionseinrichtung durch kapazitive Sensoren gebildet, welche eine berührungslose Einklemmerkennung aufgrund einer Änderung des Dielektrikums ermöglichen.

Um eine sichere Erkennung einer Einklemmsituation zu gewährleisten, ist es vorteilhaft, mehrere kapazitive Sensoren vorzusehen, die sich bei einer Kapazitätsänderung aller Sensoren, z. B. aufgrund einer Veränderung der Luftfeuchtigkeit, selbst abgleichen. Spricht nur eine Auswahl der verwendeten kapazitiven Sensoren an, so kann dies mit hoher Sicherheit als Vorliegen einer Einklemmsituation interpretiert werden. Durch eine Auswertung der Dynamik der Kapazitätsänderung kann eine zusätzliche Erhöhung der Sicherheit des Ausgangssignals erreicht werden.

Kapazitive Sensoren werden zweckmäßigerweise in kritischen Bereichen des Verdeckbewegungsablaufs angeordnet, so z. B. im Bereich scharnierartig verbundener Elemente des Verdeckgestänges und/oder eines Spannbügels und/oder eines Verdeckaufnahmeraumdeckels und/oder an einem Windschutzscheibenrahmen und/oder einem an Fenster angrenzenden Bereich.

Prinzipiell kann die kapazitive Sensorik durch - z. B. eingangs zitierte - bekannte für den jeweiligen Anwendungsfall geeignete kapazitive Sensoren gebildet werden. Aufgrund der Baugröße bekannter kapazitiver Sensoren ist die Möglichkeit der Anordnung der Sensoren jedoch häufig beschränkt.

Die Erfindung hat auch einen kapazitiven Sensor zum Gegenstand, welcher besonders geeignet zur Detektion einer Einklemmsituation bei einer Verdeckbewegung ist. Bei diesem kapazitiven Sensor sind die Elektroden auf einem in alle Richtungen wellbaren Folienmaterial angeordnet. Das Dielektrikum wird hier durch Luft gebildet.

Eine solche nur minimalen Bauraum erfordernde Sensorfolie kann in allen Bereichen eines fahrbaren Verdecks angebracht werden, wobei insbesondere eine Anordnung zwischen einem Dichtungsprofil und/oder einem Verkleidungsteil und dessen Auflage vorteilhaft ist.

Eine weitere vorteilhafte Möglichkeit der Erkennung einer Einklemmsituation ist die Auswertung der Stromaufnahme eines Verdeckantriebs.

So kann es in einer vorteilhaften Ausführung der Erfindung vorgesehen sein, daß die Sensorik wenigstens einen Sensor zur Erfassung einer Stromaufnahme eines Verdeckantriebs umfaßt, welcher mit einer Auswerteeinheit verbunden ist, mittels der durch Vergleich eines aktuellen Stromverlaufs mit mathematisch ermittelten Einklemmsituationsmerkmalen hinsichtlich des Stromverlaufs eine Einklemmsituation detektierbar ist.

Bei der Gewährleistung eines zuverlässigen Einklemmschutzes hat die Genauigkeit von Informationen über eine aktuelle Verdeckposition große Bedeutung. Für eine kontinuierliche Wegabfrage können bei dem Verdeck an sich bekannte Potentiometer eingesetzt werden, welche an einem Drehpunkt eines bezüglich seiner Position abzufragenden Dachteiles angebracht werden.

Eine Verdeckpositionserkennung ist des weiteren möglich über die Messung eines Ausfahrweges von Zylindern einer Hydraulik des Verdeckantriebes, wobei hier jedoch zu berücksichtigen ist, daß eine solche Lösung einen größeren Bauraum erfordert und keine Information über die Lage des Verdecks an sich, sondern nur über den Verfahrweg eines Zylinders liefert. Damit kann gegebenenfalls ein defekter Anbindungspunkt, d.h. eine Unterbrechung einer Verbindung zwischen einem Zylinder und dem Verdeckgestänge, nicht erkannt werden.

Bei einer bevorzugten Ausführung der Erfindung ist daher zur Überwachung der Position des Verdecks eine kontinuierliche Verdeck-Positionserkennung vorgesehen, bei der mittels eines eine aktuelle Beschleunigung bezogen auf die Fallbeschleunigung messenden Beschleunigungssensors die Position eines definierten Elementes des Verdeckmechanismus ermittelt wird.

Mit Hilfe solcher auch G-Sensoren genannter Beschleunigungssensoren, die zwei Achsen in einer Ebene, die Längsbeschleunigung und die Querbeschleunigung erfassen, kann die Längsneigung und die Querneigung des Verdecks ermittelt werden. Durch eine sehr hohe mögliche Auflösung der Beschleunigung läßt sich der Winkel zur Erdoberfläche auf ca. 0,2° auflösen.

Die Verwendung von G-Sensoren ermöglicht somit eine genaue Lageerkennung des Verdecks zu jedem Zeitpunkt sowie eine große konstruktive Freiheit bei ihrer Anordnung, da eine solche Verdeck-Positionserkennung unabhängig von der Verdeckkinematik realisiert werden kann.

Zudem haben derartige Beschleunigungssensoren den Vorteil, daß sie auch noch für andere Funktionalitäten im Fahrzeug, wie z. B. eine Überrollerkennung, genutzt werden können.

Weitere Vorteile und vorteilhafte Ausgestaltungen der Erfindung sind der Beschreibung, der Zeichnung und den Patentansprüchen entnehmbar.

Ausführungsbeispiele der Erfindung sind in der Zeichnung schematisch vereinfacht dargestellt und werden in der nachfolgenden Beschreibung näher erläutert.
Es zeigt:
- Fig. 1: eine schematisierte Draufsicht auf ein Cabriolet-Kraftfahrzeug mit einem sich in geöffnetem Zustand befindlichen fahrbaren Verdeck, wobei Bildsensoren einer erfin- dungsgemäßen Detektionseinrichtung darge- stellt sind;
- Fig. 2: das Verdeck des Kraftfahrzeugs nach Figur 1 in einer Alleinstellung;
- Fig. 3a und Fig. 3b: Verläufe einer Pixelanzahl nach Differenzbildung bei einer Bildaus- wertung;
- Fig. 4: eine vereinfachte dreidimensionale Ansicht des Kraftfahrzeugs nach Figur 1, wobei ei- ne Detektionsebenen aufspannende optische Sensorik der erfindungsgemäßen Detektion- seinrichtung dargestellt ist;
- Fig. 5: das Kraftfahrzeug nach Figur 3 mit einer weitere Detektionsebenen erzeugenden opti- schen Sensorik;
- Fig. 6: eine Prinzipskizze eines Aufbaus einer ka- pazitiven Sensorik der erfindungsgemäßen Detektionseinrichtung;
- Fig. 7a und Fig. 7b: Stromverläufe zur Auswertung von Signalen eines Sensors zur Erfassung einer Stromaufnahme eines Verdeckantriebs der erfindungsgemäßen Detektionseinrich- tung;
- Fig. 8: ein Ablaufdiagramm eines Normalmodus und eines Sicherheitsmodus zur Steuerung einer Verdeckbewegung; und
- Fig. 9: eine Prinzipskizze einer Verdeck-Positi- onserkennungseinrichtung.

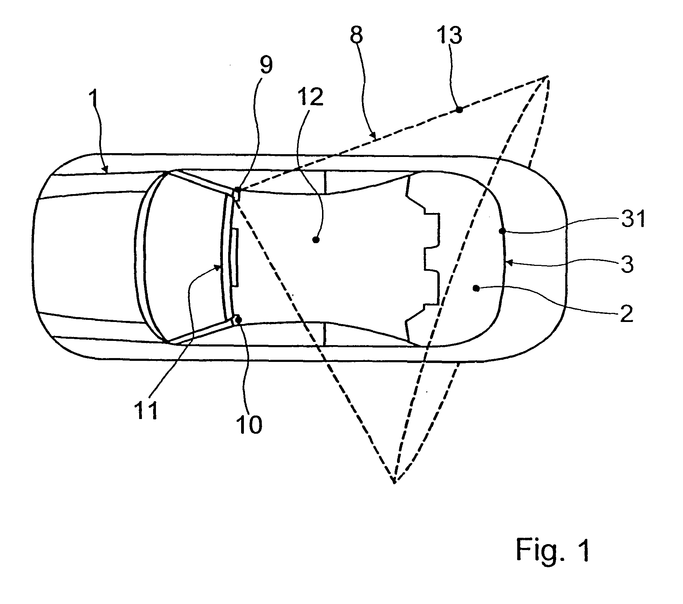

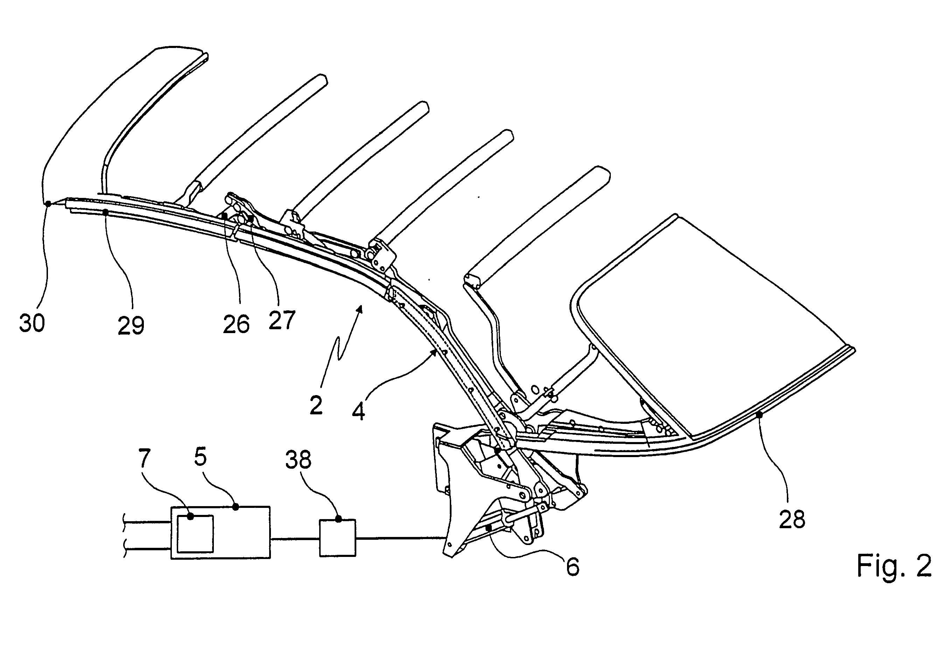

Die Figur 1 zeigt ein Cabriolet-Kraftfahrzeug 1 mit einem fahrbaren Verdeck 2, welches in Figur 1 in einem geöffneten, in einem Verdeckaufnahmeraum 3 abgelegten Zustand gezeigt ist und in Figur 2 in Alleinstellung näher ersichtlich ist.

Das Verdeck 2 umfaßt einen Verdeckmechanismus 4, der durch eine ein Verdecksteuergerät darstellende Steuereinrichtung 5 und einen in Figur 2 nur ausschnittsweise dargestellten elektro-hydraulischen Verdeckantrieb 6 zwischen einer geöffneten und einer geschlossenen Stellung bewegbar ist.

Die Steuereinrichtung 5 ist dabei derart ausgelegt, daß sie mit einem Regensensor und einem Funkschlüssel zusammenwirkt, und bei einer Anforderung durch den Fahrer mittels einer Tasteinrichtung in dem Fahrzeug oder durch den Funkschlüssel sowie bei Erkennen eines Niederschlags durch den Regensensor eine automatische Verdeckbewegung einleitet.

Um die automatische Verdeckbewegung ohne Beteiligung eines Kraftfahrzeugbenutzers und ohne dessen Beobachtung sicher durchführen zu können, ist eine automatische Detektionseinrichtung 7 zur Erkennung eines Eingriffs in einem Bewegungsraum des Verdeckmechanismus 4 vorgesehen, welche bezüglich ihrer Auswerteeinheit vorliegend in das Verdecksteuergerät 5 integriert ist.

Die Detektionseinrichtung 7 weist eine Sensorik mit nach unterschiedlichen Meßprinzipien messenden Sensoren auf, wobei ein Teil der Sensorik eine in Figur 1 schematisch gezeigte optische Sensorik 8 darstellt, welche bei der Ausführung nach Figur 1 mit zwei Bildsensoren 9, 10 ausgebildet ist.

Bei der gezeigten Ausführung sind die Bildsensoren 9, 10 an einem Windschutzscheibenrahmen 11 jeweils im Bereich eines Übergangs zu einer A-Säule angeordnet, jedoch ist es in einer alternativen Ausführung auch möglich, nur einen mittig angeordneten Bildsensor vorzusehen oder die Bildsensoren an Außenspiegeln oder anderen geeigneten Randelementen des Kraftfahrzeuges anzubringen.

Die Bildsensoren 9, 10 stellen vorliegend Schwarz-Weiß-Kameras dar, die einen Fahrzeuginnenraum 12 und einen hinteren Schwenkbereich des Verdecks 2 aufnehmen, wie es ein in Figur 1 für die in Fahrzeugvorwärtsfahrtrichtung rechts angeordnete Kamera 9 angedeuteter Sichtbereich 13 zeigt.

Die von den Kameras 9, 10 aufgenommenen Bilder werden mit geeigneten Auswertealgorithmen der Detektionseinrichtung 7 ausgewertet. Dabei wird bei der gezeigten Ausführung beispielsweise von zwei aufeinanderfolgenden Bildern eine Differenz gebildet, wobei von dem resultierenden Bild die Summe der übrig gebliebenen Pixel ermittelt wird. Ein Eingriff in den Bewegungsraum des Verdeckmechanismus 4 zeigt sich dabei durch einen plötzlichen Anstieg über einen definierten Grenzwert hinaus im zeitlichen Verlauf dieser Pixelanzahl.

Um eine größere Unabhängigkeit von Umgebungseinflüssen zu erzielen ist es zweckmäßig, die Differenzbilder beider Kameras 9, 10 voneinander zu subtrahieren. So erhält man bei entsprechender Ausrichtung der Kameras 9, 10 Unterschiede in der Dynamik der Bildänderung zwischen einer rechten und einer linken Seite des Kraftfahrzeuges 1.

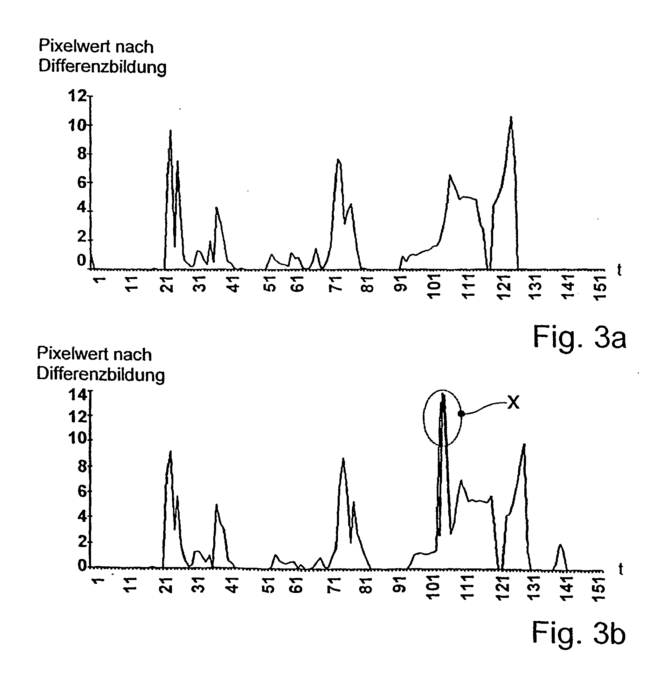

In den Figuren 3a und 3b sind Verläufe der Pixelanzahl nach Differenzbildung über einer Zeit t gezeigt, wobei in Figur 3a ein Pixelwert-Verlauf bei einer ungestörten Verdeckbewegung und in Figur 3b ein Pixelwert-Verlauf bei einer Verdeckbewegung mit Eingriff in den Verdeckmechanismus 4 gezeigt ist. Dabei zeigt sich in einem mit "X" gekennzeichneten Bereich in Figur 3b ein deutlicher Anstieg der Pixelanzahl im zeitlichen Verlauf, welcher den Eingriff in den Verdeckmechanismus 4 repräsentiert.

Zur Bildauswertung geeignet ist hier auch eine Bildcluster-Methode, wobei der Bewegungsraum des Verdeckmechanismus 4 in ausgewählten Teilbildern aufgeteilt wird und relative Änderungen in jedem Teilbild ausgewertet werden.

In einem Fehlerfall, der durch Auswertung der Bildinformationen im Bereich kritischer, in einer Software der Detektionseinrichtung 7 definierte Bereiche erkannt wird, folgt eine vorab definierte Reaktion, welche je nach erkanntem Fehler in einer Unterbrechung der Verdeckbewegung, einem Reversieren einer Teilbewegung oder einem automatischen Bewegen in die Startposition bestehen kann.

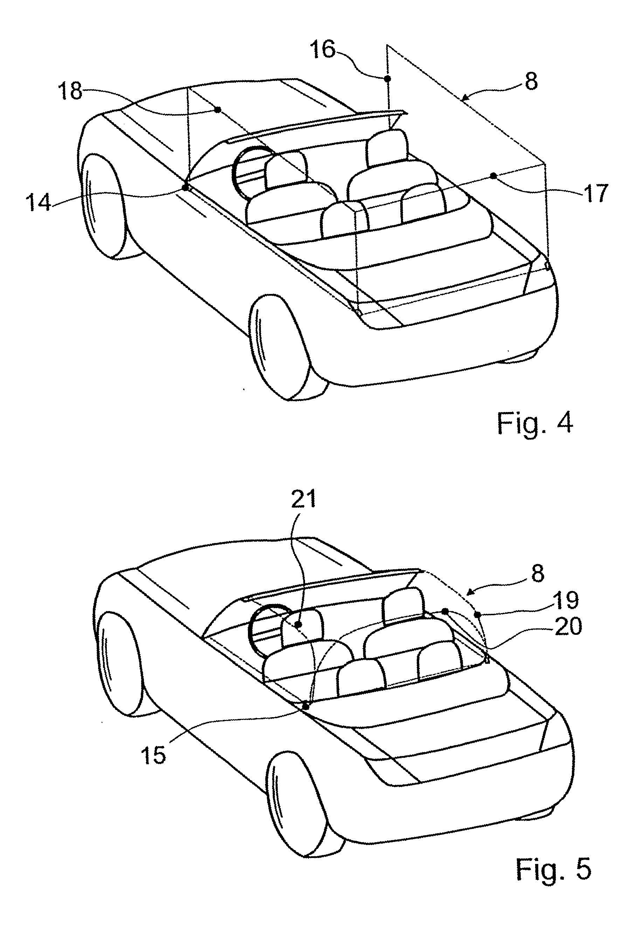

Die Figuren 4 und 5 zeigen eine weitere Ausgestaltung einer Sensorik 8 mit einer optischen Lichtsendeund Empfangseinrichtung 14 bzw. 15, welche im Falle der Figur 4 Lichtebenen 16, 17, 18 um den Bewegungsraum des Verdecks 2 auf einer einer Fahrzeugaußenseite zugewandten Seite des Verdeckmechanismus 4 und im Falle der Figur 5 Lichtebenen 19, 20, 21 um den Bewegungsraum des Verdecks 2 auf einer dem Fahrgastraum 12 zugewandten Seite des Verdeckmechanismus 4 bildet.

Die Lichtsende- und Empfangseinrichtung 14 bzw. 15 kann in an sich bekannter Bauart mit einem Laser als Lichtquelle ausgebildet sein, wie es z. B. auch aus der deutschen Offenlegungsschrift DE 37 00 009 A1 bekannt ist.

Wenn die Lichtebenen 16 bis 21 von einem Gegenstand oder menschlichen Körperteil durchdrungen werden, tritt eine Reflexionsabweichung auf, welche von geeigneten Reflexionserkennungsmitteln, wie z. B. einem Sensor, gemessen und als Signal an eine Auswerteeinheit der Detektionseinrichtung 7 gesandt werden. Die Auswerteeinheit berechnet aus diesen Ausgangssignalen mit geeigneten Algorithmen eine Entfernung und einen Winkel des Eingriffs in die betreffende Lichtebene.

Die vorgestellte optische Sensorik 8 ermöglicht eine berührungslose Einklemmerkennung und eignet sich somit in besonderer Weise als Bestandteil eines Multisensor-Systems, wie der Sensorik der Detektionseinrichtung 7, welche neben der optischen Sensorik 8 vorliegend auch eine kapazitive Sensorik 49 aufweist.

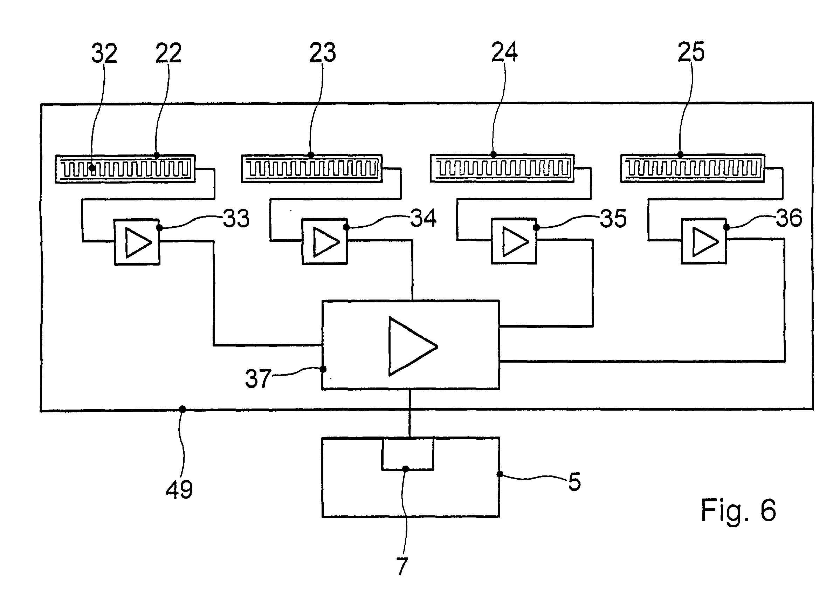

In Figur 6 ist prinzipmäßig ein Aufbau der kapazitiven Sensorik 49 gezeigt, welche mit mehreren kapazitiven Sensoren ausgebildet ist, von denen eine Auswahl mit den kapazitiven Sensoren 22, 23, 24 und 25 in Figur 6 gezeigt ist.

Die kapazitiven Sensoren 22 bis 25 sind bei der gezeigten Ausführung jeweils in einem kritischen Bereich des Verdeckmechanismus 4 angeordnet, wie z. B. in einem in der Figur 2 gezeigten Bereich scharnierartig verbundener Elemente 26, 27 eines Verdeckgestänges, eines Spannbügels 28, einem an Fenster angrenzenden Bereich 29, einem Anlagebereich 30 an den Windschutzscheibenrahmen 11 und in einem Anlagebereich für einen in Figur 1 angedeuteten Verdeckaufnahmeraumdeckel 31.

Wie in der Figur 6 schematisch gezeigt ist, ist ein jeder kapazitiver Sensor 22 bis 25 vorliegend als ein flächiger, folienartiger Sensor ausgebildet, bei der Elektroden 32 auf einem Folienmaterial angeordnet sind. Die spezielle Struktur der Leiterbahnen auf dieser Folie ergibt jeweils einen kapazitiven Aufnehmer, der einseitig auf eine Änderung des Dielektrikums, welches bei den kapazitiven Sensoren 22 bis 25 Luft ist, reagiert. Bei einer Annäherung eines Gegenstandes oder eines Körperteils ändert sich somit die Kapazität, die in einer integrierten Elektronik zur Weiterverarbeitung in der Steuereinrichtung 5 des Verdecks 2 in ein analoges Spannungssignal umgewandelt wird.

Wie der Figur 6 zu entnehmen ist, sind.die folienartig ausgebildeten Sensoren 22 bis 25 jeweils über eine Auswertetechnik bzw. Auswerteschaltung 33, 34, 35, 36, welche aus der Kapazität des Sensors ein analoges Spannungssignal generiert, mit dem Verdecksteuergerät 5 verbunden, wobei zwischen den Auswerteschaltungen 33 bis 36 und dem Verdecksteuergerät 5 bei der gezeigten Ausführung ein sich nachregelnder Schwellwertschalter 37 vorgesehen ist. Der sich nachregelnde Schwellwertschalter 37 bewirkt beispielsweise bei stark erhöhter Luftfeuchtigkeit der Umgebung, wie z. B. einer Auflage von Schnee, eine Verschiebung des Schaltpunktes und eine damit verbundene Reduzierung der Empfindlichkeit aller Sensoren, so daß z.B. durch den Schnee hindurch ein Körperteil, wie beispielsweise ein Finger, erkannt werden kann. Die den einzelnen kapazitiven Sensoren 22 bis 25 zugeordneten Auswerteschaltungen 33 bis 36 sind ebenfalls auf einem Folienmaterial angeordnet.

Die kapazitiven Sensorfolien 22 bis 25, die nach Möglichkeit zwischen Dichtungen oder Verkleidungsteilen des Verdeckmechanismus 4 und deren Auflage angebracht sind, erkennen einen Fremdkörper in einem Abstand von beispielsweise bis zu 60 mm.

Um Fehlauslösungen aufgrund äußerer Einflüsse auszuschließen, werden die verwendeten Sensoren 22 bis 25 untereinander abgeglichen und ihre Signale von der zugehörigen Auswerteeinrichtung bzw. dem Schwellwertschalter 23 auf Plausibilität geprüft. So wird bei einer Kapazitätsänderung aller kapazitiver Sensoren von einer Änderung der Umgebungseinflüsse ausgegangen, während bei einer Änderung der Kapazität bei nur einer Auswahl der kapazitiven Sensoren, z. B. eines oder zweier benachbarter Sensoren, eine Einklemmsituation erkannt wird.

Wie der Figur 2 zu entnehmen ist, weist die Sensorik der Detektionseinrichtung 7 zusätzlich einen Sensor 38 zur Erfassung einer Stromaufnahme des Verdeckantriebs 6 auf, welcher mit einer entsprechenden Auswerteeinheit der Detektionseinrichtung 7 bzw. des Verdecksteuergerätes 5 verbunden ist, die durch Vergleich eines aktuellen Stromverlaufs mit mathematisch ermittelten Einklemmmerkmalen bezüglich des Stromverlaufs eine Überprüfung auf das Vorliegen einer Einklemmsituation durchführt.

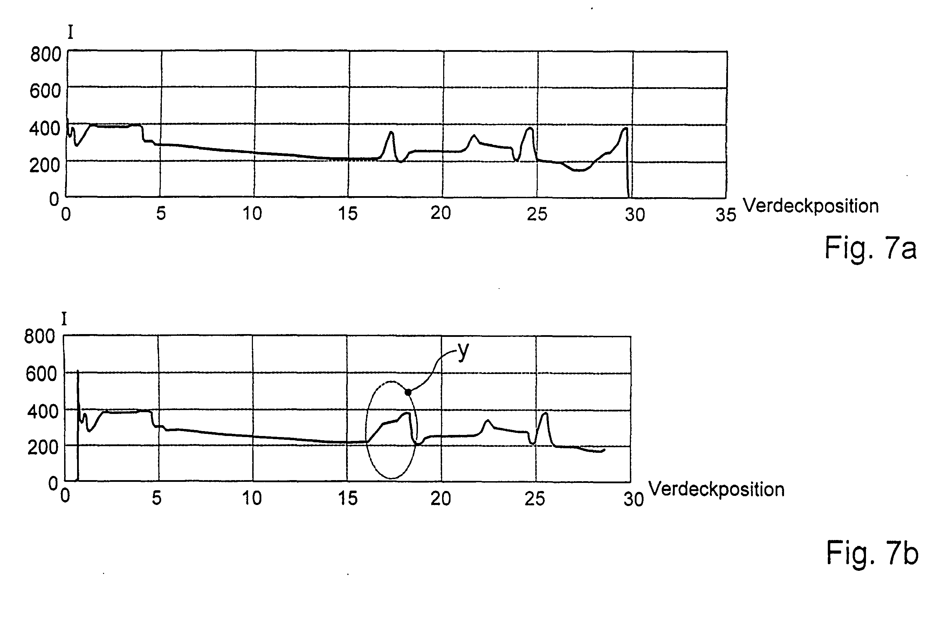

Die Unterschiede in den Stromverläufen sind in den Figuren 7a und 7b gezeigt, wobei die Figur 7a einen für eine bestimmte Verdeckposition charakteristischen Verlauf eines Stromes I ohne einen Eingriff in die Bewegung des Verdeckmechanismus 4 zeigt. Wird nun ein in Figur 7b gezeigter aktueller Stromverlauf mit dem charakteristischen Stromverlauf der Figur 7a verglichen, so zeigt sich eine Abweichung in einem mit "Y" gekennzeichneten Bereich, in dem eine charakteristische Änderung des Stromes I vorliegt. Diese charakteristische Änderung des Stromes I im Bereich Y wird von der Auswerteeinheit als Eingriff in die Bewegung des Verdeckmechanismus 4 ausgewertet, da bei einer Krafteinleitung auf den Verdeckmechanismus 4 entgegen dessen Bewegungsrichtung eine Erhöhung der Stromaufnahme des Verdeckantriebs, welcher hier mit einer Hydraulikpumpe ausgebildet ist, auftritt.

Durch den Vergleich mit in einer Auswerteeinheit abgelegten charakteristischen Einklemmmerkmalen kann somit bei entsprechender Detektion dieser Merkmale im aktuellen Stromverlauf auf eine Einklemmsituation geschlossen werden. Äußere Randbedingungen wie die Temperatur und eine Batteriespannung lassen sich durch entsprechende Algorithmen bei der Stromüberwachung weitgehend ausschalten.

Wenngleich bei einer solchen Stromauswertung alleine bereits gesetzliche Anforderungen an eine maximal zulässige Einklemmkraft von z. B. maximal 100 N erfüllt werden können, so ist hier jedoch ein Kontakt mit dem in den Bewegungsablauf eingreifenden Objekt erforderlich. Bei der gezeigten Ausführung ist die Stromauswertung mittels des Sensors 38 daher in Verbindung mit nach einem anderen Wirkprinzip arbeitenden Sensoren zur Plausibilitätsprüfung oder als zusätzlicher Schutz in nicht abgesicherten Bereichen des Verdeckmechanismus 4 vorgesehen.

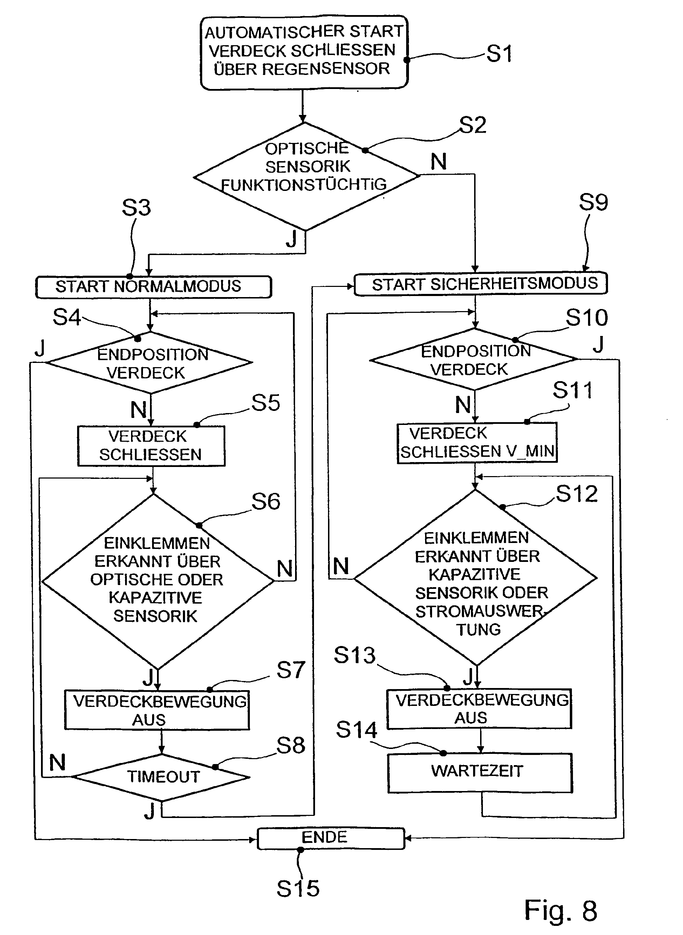

Sobald eine Störung der Detektionseinrichtung 7 erkannt wird oder die vorbeschriebene Sensorik eine Einklemmsituation bei der Verdeckbewegung detektiert, wird die Verdeckbewegung in einem in Figur 8 näher gezeigten Sicherheitsmodus gesteuert, in dem die Verdeckbewegung mit reduzierter Geschwindigkeit und Kraft fortgesetzt, stillgesetzt oder ganz oder teilweise reversiert wird.

Wie dem Ablaufdiagramm in Figur 8 zu entnehmen ist, wird hier in einem ersten Schritt S1 ein automatischer Start der Verdeckbewegung zum Schließen des Verdecks ausgelöst, wenn von einem Regensensor eine definierte Wassermenge detektiert wird.

Nach dem Start der automatischen Verdeckbewegung wird in einem weiteren Schritt S2 geprüft, ob die vorliegende optische Sensorik 8 funktiontüchtig ist. Wenn dies zutrifft, wird eine Verarbeitungsfunktion S3 für einen Normalmodus gestartet, in dem der Verdeckmechanismus 4 mit größtmöglicher Kraft und Geschwindigkeit angetrieben wird.

Dabei wird in einer Abfragefunktion S4 ständig abgefragt, ob das Verdeck 2 bereits seine Endposition erreicht hat. Falls dies der Fall ist, wird in eine die Überwachungsfunktion beendende Verarbeitungsfunktion S15 verzweigt, ansonsten wird das Verdeck 2 über eine weitere Verarbeitungsfunktion S5 weiterhin in seiner Schließbewegung gehalten, wobei während der Bewegung permanent in einer Abfragefunktion S6 überprüft wird, ob ein Einklemmen über die optische oder kapazitive oder sonstige Sensorik erkannt wird.

Bei einem positiven Abfrageergebnis der Abfragefunktion S6, d. h. bei Erkennen einer Einklemmsituation, wird die Verdeckbewegung in einer nachfolgenden Verarbeitungsfunktion S7 zunächst gestoppt und eine Wartezeit gestartet. In einer auch "Timeout"-Funktion genannten Abfragefunktion S8 wird während des Stillstandes der Verdeckbewegung abgefragt, ob die Einklemmsituation weiterhin besteht.

Falls die Einklemmsituation nicht weiter gegeben ist, wird zurückverzweigt zur Abfragefunktion S4, in der überprüft wird, ob die Endposition des Verdecks 2 erreicht ist, ansonsten wird die Verdeckbewegung über die Funktion S5 weiter zugelassen.

Falls nach Ablauf der Wartezeit bei gestoppter Verdeckbewegung die Abfragefunktion S8 ergibt, daß die Einklemmsituation weiterhin besteht, wird mit einer Verarbeitungsfunktion S9 ein Sicherheitsmodus gestartet. Dieser Sicherheitsmodus wird ebenfalls gestartet, wenn unmittelbar nach Start der automatischen Verdeckbewegung in der Abfragefunktion S2 erkannt wird, daß die optische Sensorik 8 nicht funktionstüchtig ist.

Nach Start des Sicherheitsmodus wird wie in dem Normalmodus zunächst in einer Abfragefunktion S10 überprüft, ob das Verdeck 2 seine Endposition erreicht hat. Falls dies bereits der Fall ist, wird zu der die Überwachung beendenden Funktion S15 verzweigt.

Andernfalls wird die Verdeckbewegung über eine Verarbeitungsfunktion S11 mit verminderter Geschwindigkeit v_min fortgesetzt, wobei während dieser verlangsamten Verdeckbewegung anhand einer Abfragefunktion S12 überprüft wird, ob eine Einklemmsituation über die kapazitive Sensorik oder die Stromauswertung erkannt wird. Wenn dies nicht der Fall ist, wird zur Abfragefunktion S10 zurückverzweigt und das Verdeck mit verminderter Geschwindigkeit bis zum Erreichen seiner Endposition geschlossen.

Falls in der Abfragefunktion S12 in dem Sicherheitsmodus eine Einklemmsituation erkannt wird, wird die Verdeckbewegung in einer Verarbeitungsfunktion S13 je nach Schwere der Einklemmsituation gestoppt oder reversiert, wobei in einem weiteren Schritt S14 eine Wartezeit gestartet wird, während der überprüft wird, ob die Einklemmsituation weiterhin besteht. Solange dies der Fall ist, bleibt die Verdeckbewegung gestoppt oder reversiert.

Mit Hilfe des Sicherheitsmodus wird ausgeschlossen, daß aufgrund eines Einfachfehlers die Automatikfunktion der Verdeckbewegung nicht gestartet wird und dadurch das Fahrzeug gegebenenfalls beschädigt wird. Andererseits wird bei einer eindeutigen Einklemmsituation sofort eine angemessene Reaktion eingeleitet.

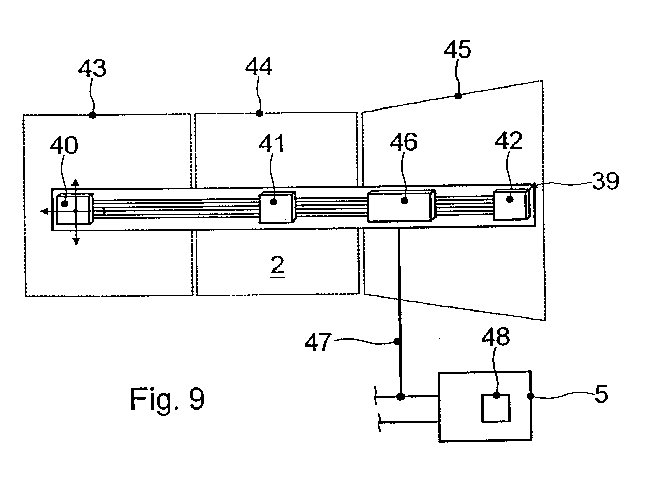

Um eine möglichst sichere Auswertung der vorliegenden Signale zu gewährleisten, ist eine kontinuierliche Verdeck-Positionserkennung 39 vorgesehen, welche in Figur 9 prinzipmäßig dargestellt ist.

Die Verdeck-Positionserkennung 39 wird durch mehrere Beschleunigungssensoren 40, 41, 42 gebildet, welche jeweils auf einem bestimmten Dachelement angeordnet sind, so z. B. vorliegend der Beschleunigungssensor 40 auf einem vorderen Dachsegment 43, der Beschleunigungssensor 41 auf einem mittleren Dachsegment 44 und der Beschleunigungssensor 42 auf einem hinteren Dachsegment 45. Die Beschleunigungssensoren 40, 41, 42 stellen sogenannte G-Sensoren dar, welche eine aktuelle Beschleunigung bezogen auf die Fall- bzw. Erdbeschleunigung messen und wiedergeben. Die auf der Erde vorliegende Fallbeschleunigung von 9,81 m/s² entspricht dabei 1 G (G = Gravitation). Die Beschleunigungssensoren 40, 41, 42 messen nicht nur die Beschleunigung des Elements, auf dem sie jeweils befestigt sind, sondern auch die Neigung zur Erdoberfläche.

Die hier verwendeten Beschleunigungssensoren 40, 41, 42 arbeiten in einem Bereich von 0 G bis maximal 10 G und liefern eine Ausgangsspannung linear zu dem Beschleunigungswert.

Die Beschleunigungssensoren lassen sich in dem Verdeck 2 frei positionieren, wobei lediglich auf die Ausrichtung in einem definierten Koordinatensystem geachtet werden muß.

Wie der Figur 9 zu entnehmen ist, sind die Beschleunigungssensoren 40, 41, 42 an dem Verdeck 2 über einen geeigneten Leitungssatz oder einen hochflexiblen Streifenleiter mit einer Auswerteeinheit 46 verbunden, die die Auswertung der Sensorsignale vornimmt und aus den einzelnen Positionen eine relative Position errechnet. Die errechnete relative Position der Beschleunigungssensoren 40, 41, 42 bzw. der sie tragenden Bauteile wird von der Auswerteeinheit 46 über ein Bussystem wie z. B. einen CAN-Bus 47 an das Verdecksteuergerät 5 gesendet.

In dem Verdecksteuergerät 5 befindet sich bei der hier gezeigten Ausführung ein weiterer als G-Sensor ausgebildeter Beschleunigungssensor 48, der die Lage bzw. Neigung des Kraftfahrzeugs 1 in dem definierten Koordinatensystem, dem auch die Beschleunigungssensoren 40, 41, 42 zugeordnet sind, ermittelt. Aus der Relativposition und der somit vorliegenden Information über die Fahrzeugneigung errechnet das Verdecksteuergerät 5 die aktuelle Position des Verdecks 2.

Mit dieser Verdeck-Positionserkennung 39 kann vorteilhafterweise auch auf übliche Verdeckendlagenschalter verzichtet werden, da bei Erreichen eines Anschlags des Verdecks 2, d. h. bei vollständig geschlossener oder geöffneter Position, von den Beschleunigungssensoren 40, 41, 42, welche hierbei eine starke negative Beschleunigung erfahren, ein entsprechender Impuls ausgegeben wird.

Des weiteren ist es mit der kontinuierlichen Verdeck-Positionserkennung 39 möglich, eine adaptive, beispielsweise durch ein einmaliges manuelles Anfahren einzelner definierter Verdeckpositionen selbstlernende Steuerung der Verdeckbewegung zu realisieren.

Dabei kann die Verdeckposition mit höherer Genauigkeit bestimmt werden, wodurch wiederum eine bessere Erkennung einer Einklemmsituation bei der Verdeckbewegung möglich ist.

### Bezugszeichen

- 1: Cabriolet-Kraftfahrzeug
- 2: Verdeck
- 3: Verdeckaufnahmeraum
- 4: Verdeckmechanismus
- 5: Steuereinrichtung, Verdecksteuergerät
- 6: Verdeckantrieb
- 7: Detektionseinrichtung
- 8: optische Sensorik
- 9: Bildsensor, Kamera
- 10: Bildsensor, Kamera
- 11: Windschutzscheibenrahmen
- 12: Fahrzeuginnenraum, Fahrgastraum
- 13: Sichtbereich
- 14: Lichtsende-Empfangseinrichtung
- 15: Lichtsende-Empfangseinrichtung
- 16 - 21: Lichtebene
- 22 - 25: kapazitiver Sensor, Sensorfolie
- 26: Element des Verdeckgestänges
- 27: Element des Verdeckgestänges
- 28: Spannbügel
- 29: Bereich, der an Fenster grenzt
- 30: Anlagebereich an Windschutzscheibenrahmen
- 31: Verdeckaufnahmeraumdeckel
- 32: Elektroden
- 33 - 36: Auswerteelektronik, Auswerteschaltung
- 37: Schwellwertschalter
- 38: Sensor zur Stromaufnahme
- 39: Verdeckpositionserkennung
- 40 - 42: Beschleunigungssensor, G-Sensor
- 43: vorderes Dachsegment des Verdeckgestänges
- 44: mittleres Dachsegment des Verdeckgestänges
- 45: hinteres Dachsegment des Verdeckgestänges
- 46: Auswerteeinheit
- 47: CAN-Bus
- 48: Beschleunigungssensor, G-Sensor
- 49: kapazitive Sensorik

- I: Strom
- S1 - S15: Verfahrensschritt der Verdecksteuerung
- t: Zeit
- X: Bereich aus Pixelwertverlauf nach Differenz- bildung über der Zeit
- Y: Bereich eines Stromverlaufes über Verdeckpo- sitionen

## Patentansprüche

1. Kraftfahrzeug mit einem fahrbaren Verdeck (2), einer Steuereinrichtung (5) zur Steuerung einer Verdeckbewegung und einer Detektionseinrichtung (7), welche eine Sensorik (8, 38, 49) zur Erkennung eines Eingriffs in einen Bewegungsraum eines Verdeckmechanismus (4) aufweist, wobei die Sensorik (8, 38, 49) nach unterschiedlichen Meßprinzipien messende Sensoren (9, 10, 14, 15, 22 - 25, 38) aufweist und die Steuereinrichtung (5) auf das Erkennen einer Störung der Detektionseinrichtung (7) oder das Erkennen einer Einklemmsituation mit einer Steuerung der Verdeckbewegung in einem Sicherheitsmodus (S9) reagiert,
**dadurch gekennzeichnet,**
**daß** die Steuereinrichtung (5) in dem Sicherheitsmodus (S9) drei mögliche Reaktionen für die Verdeckbewegung vorsieht, nämlich das Fortfahren der Verdeckbewegung mit verminderter Geschwindigkeit (v_min) oder das Stoppen oder das Reversieren der Verdeckbewegung, und eine von den drei Reaktionen der erkannten Einklemmsituation und vorliegenden Betriebssituation angepasst durchführt.

2. Kraftfahrzeug nach Anspruch 1,
**dadurch gekennzeichnet,**
**daß** ein Teil der Sensoren (9, 10, 14, 15) eine optische Sensorik (8) bildet.

3. Kraftfahrzeug nach Anspruch 2,
**dadurch gekennzeichnet,**
**daß** die optische Sensorik (8) mit einer optischen Lichtsende- und Empfangseinrichtung (14, 15) ausgebildet ist, welche um den Bewegungsraum des Verdecks (2) wenigstens eine Lichtebene (16 - 21) bildet und einen Eingriff in die Lichtebene durch Reflexionserkennungsmittel detektiert.

4. Kraftfahrzeug nach Anspruch 3,
**dadurch gekennzeichnet,**
**daß** ein Laser Lichtquelle der Lichtsende- und Empfangseinrichtung (14, 15) ist.

5. Kraftfahrzeug nach Anspruch 3 oder 4,
**dadurch gekennzeichnet,**
**daß** eine Auswerteeinheit vorgesehen ist, welche aus Ausgangssignalen der Reflexionserkennungsmittel eine Entfernung und/oder einen Winkel des Eingriffs in die Lichtebene (16 - 21) berechnet.

6. Kraftfahrzeug nach einem der Ansprüche 3 bis 5,
**dadurch gekennzeichnet,**
**daß** wenigstens eine Lichtebene (19, 20, 21) auf einer einem Fahrgastraum (12) zugewandten Seite des Verdeckmechanismus (4) gebildet wird.

7. Kraftfahrzeug nach einem der Ansprüche 3 bis 6,
**dadurch gekennzeichnet,**
**daß** wenigstens eine Lichtebene (16, 17, 18) auf einer einer Fahrzeugaußenseite zugewandten Seite des Verdeckmechanismus (4) gebildet wird.

8. Kraftfahrzeug nach einem der Ansprüche 2 bis 7,
**dadurch gekennzeichnet,**
**daß** die optische Sensorik (8) mit wenigstens einem Bildsensor (9, 10), insbesondere einer Kamera, ausgebildet ist, welcher den Bewegungsraum des Verdeckmechanismus (4) überwacht.

9. Kraftfahrzeug nach Anspruch 8,
**dadurch gekennzeichnet,**
**daß** von einer Auswerteeinheit ein Eingriff in den Bewegungsraum des Verdeckmechanismus (4) mittels Differenzbild-Auswertung detektiert wird.

10. Kraftfahrzeug nach Anspruch 8 oder 9,
**dadurch gekennzeichnet,**
**daß** der wenigstens eine Bildsensor (9, 10) zusätzlich einer Einrichtung zur Überwachung des Fahrzeuginnenraumes (12) und/oder der Position von Fahrzeuginsassen zugeordnet ist.

11. Kraftfahrzeug nach einem der Ansprüche 1 bis 10,
**dadurch gekennzeichnet,**
**daß** die Sensorik wenigstens einen kapazitiven Sensor (22 - 25) umfaßt.

12. Kraftfahrzeug nach Anspruch 11,
**dadurch gekennzeichnet,**
**daß** bei einem Ansprechen einer Auswahl mehrerer kapazitiver Sensoren (22 - 25), insbesondere eines Sensors oder zweier benachbarter Sensoren, eine Einklemmsituation erkannt wird.

13. Kraftfahrzeug nach Anspruch 11 oder 12,
**dadurch gekennzeichnet,**
**daß** wenigstens ein kapazitiver Sensor (22 - 25) zur Erkennung einer Einklemmsituation im Bereich scharnierartig verbundener Elemente (26, 27) eines Verdeckgestänges und/oder eines Spannbügels (28) und/oder eines Verdeckaufnahmeraumdeckels (31) und/oder an einem Windschutzscheibenrahmen (11) und/oder einem an ein Fenster angrenzenden Bereich (29) angeordnet ist.

14. Kraftfahrzeug nach einem der Ansprüche 11 bis 13,
**dadurch gekennzeichnet,**
**daß** der kapazitive Sensor (22 - 25) zur Erkennung der Einklemmsituation zwischen einem Dichtungsprofil und/oder Verkleidungsteil und dessen Auflage angeordnet ist.

15. Kraftfahrzeug nach einem der Ansprüche 11 bis 14,
**dadurch gekennzeichnet,**
**daß** der kapazitive Sensor (22 - 25) folienartig ausgebildet ist, wobei Elektroden (32) auf einem Folienmaterial angeordnet sind.

16. Kraftfahrzeug nach Anspruch 15,
**dadurch gekennzeichnet,**
**daß** als Dielektrikum des kapazitiven Sensors (22 - 25) Luft vorgesehen ist.

17. Kraftfahrzeug nach einem der Ansprüche 11 bis 16, **dadurch gekennzeichnet, daß** der kapazitive Sensor (22 - 25) mit einem automatisch nachregelnden Schwellwertschalter (37) verbunden ist.

18. Kraftfahrzeug nach einem der Ansprüche 1 bis 17, **dadurch gekennzeichnet, daß** die Sensorik wenigstens einen Sensor (38) zur Erfassung einer Stromaufnahme eines Verdeckantriebs (6) umfaßt, welcher mit einer Auswerteeinheit verbunden ist, mittels der durch Vergleich eines aktuellen Stromverlaufs mit einer charakteristischen Änderung des Stromverlaufs oder mathematisch ermittelten Einklemmerkmalen eine Einklemmsituation detektierbar ist.

19. Kraftfahrzeug nach einem der Ansprüche 2 bis 18, **dadurch gekennzeichnet, daß** der Sicherheitsmodus (S9) gestartet wird, wenn eine Störung der optischen Sensorik (8) erkannt wird.

20. Kraftfahrzeug nach einem der Ansprüche 1 bis 19, **dadurch gekennzeichnet, daß** in einem Normalmodus (S3) bei als funktionstüchtig erkannter Sensorik nach einem Erkennen einer Einklemmsituation und einem Stop und/oder Reversieren der Verdeckbewegung eine Wartezeit gestartet wird, während der abgefragt wird, ob die Einklemmsituation weiterhin besteht, wobei bei einem positiven Abfrageergebnis der Sicherheitsmodus (S9) gestartet wird.

21. Kraftfahrzeug nach einem der Ansprüche 1 bis 20,
**dadurch gekennzeichnet,**
**daß** in dem Sicherheitsmodus (S9) eine Verarbeitungsfunktion (S11) zum Schließen oder Öffnen des Verdecks (2) mit verminderter Geschwindigkeit (v_min) gestartet wird, währenddessen in einer Abfragefunktion (S12) einer Auswerteeinheit geprüft wird, ob eine Einklemmsituation besteht, wobei bei einem positiven Abfrageergebnis eine Verarbeitungsfunktion (S13) zum Stop und/oder Reversieren der Verdeckbewegung gestartet wird.

22. Kraftfahrzeug nach einem der Ansprüche 1 bis 21,
**dadurch gekennzeichnet,**
**daß** eine Abfrage nach einer Störung der Detektionseinrichtung (7) oder dem Erkennen einer Einklemmsituation nach einem automatischen Start (S1) der Verdeckbewegung erfolgt.

23. Kraftfahrzeug nach einem der Ansprüche 1 bis 22,
**dadurch gekennzeichnet,**
**daß** zur Überwachung der Position des Verdecks (2) eine kontinuierliche Verdeck-Positionserkennung (39) vorgesehen ist, bei der mittels eines eine aktuelle Beschleunigung bezogen auf die Fallbeschleunigung messenden Beschleunigungssensors (40, 41, 42) die Position eines definierten Elements (43, 44, 45) des Verdeckmechanismus (4) ermittelt wird.

24. Kraftfahrzeug nach Anspruch 23,
**dadurch gekennzeichnet,**
**daß** mehrere Beschleunigungssensoren (40, 41, 42) an Elementen (43, 44, 45) des Verdeckmechanismus (4) angeordnet und mit einer Auswerteeinheit (46) verbunden sind, die aus Signalen der Beschleunigungssensoren (40, 41, 42) eine relative Position errechnet, welche zusammen mit einer vorliegenden Information über die Fahrzeugneigung die aktuelle Verdeckposition ergibt.

25. Kraftfahrzeug nach einem der Ansprüche 1 bis 24,
**dadurch gekennzeichnet,**
**daß** die Steuereinrichtung (5) zur Steuerung der Verdeckbewegung einen weiteren Beschleunigungssensor (48) zur Ermittlung der Fahrzeugneigung aufweist.

26. Kraftfahrzeug nach einem der Ansprüche 1 bis 25,
**dadurch gekennzeichnet,**
**daß** die Sensorik Teil eines Regensensors ist.

## Claims

1. Motor vehicle, comprising a movable hood (2), a control unit (5) for controlling a hood movement, and a detection device (7), which comprises a sensor system (8, 38, 49) for detection of an interference into a movement area of a hood mechanism (4), said sensor system (8, 38, 49) comprising sensors (9, 10, 14, 15, 22 - 25, 38) that measure according to different measurement principles and said control unit (5) responding to the detection of a malfunction in the detection device (7), or to the detection of an obstruction situation, by controlling the hood movement in a safety mode (S9),
**characterized in that**
the control unit (5) provides three possible hood movement responses in the safety mode (S9), namely continuing the hood movement at a reduced speed (v_min), or stopping or reversing the hood movement, and carries out one of said three responses in a manner adapted to the detected obstruction situation and to the existing operation situation.

2. Motor vehicle according to claim 1, **characterized in that** some of the sensors (9, 10, 14, 15) constitute an optical sensor system (8).

3. Motor vehicle according to claim 2, **characterized in that** the optical sensor system (8) is provided with an optical light-emitting and light-receiving device (14, 15), which forms at least one light plane (16 - 21) around the movement area of the hood (2) and uses reflection detection means to detect any interference into the light plane.

4. Motor vehicle according to claim 3, **characterized in that** a laser is the light source of the light-emitting and light-receiving device (14, 15).

5. Motor vehicle according to claim 3 or 4, **characterized in that** an evaluating unit is provided, which uses output signals from the reflection detection means to compute a distance and/or an angle of the interference into the light plane (16 - 21).

6. Motor vehicle according to any one of claims 3 to 5, **characterized in that** at least one light plane (19, 20, 21) is formed on a side of the hood mechanism (4) turned towards a passenger compartment (12).

7. Motor vehicle according to any one of claims 3 to 6, **characterized in that** at least one light plane (16, 17, 18) is formed on a side of the hood mechanism (4) turned towards a vehicle exterior.

8. Motor vehicle according to any one of claims 2 to 7, **characterized in that** the optical sensor system (8) is provided with at least one image sensor (9, 10), in particular a camera, which monitors the movement area of the hood mechanism (4).

9. Motor vehicle according to claim 8, **characterized in that** an interference into the movement area of the hood mechanism (4) is detected by an evaluating unit by means of differential image evaluation.

10. Motor vehicle according to claim 8 or 9, **characterized in that** the at least one image sensor (9, 10) is additionally assigned to a device for monitoring the vehicle's interior (12) and/or the position of vehicle occupants.

11. Motor vehicle according to any one of claims 1 to 10, **characterized in that** the sensor system comprises at least one capacitive sensor (22 - 25).

12. Motor vehicle according to claim 11, **characterized in that** an obstruction situation is detected when a selection of several capacitive sensors (22 - 25), in particular one sensor or two adjacent sensors, are responding.

13. Motor vehicle according to claim 11 or 12, **characterized in that** at least one capacitive sensor (22 - 25) is arranged to detect an obstruction situation in the area of hinge-like connected elements (26, 27) of a hood linkage and/or of a tensioning bow (28), and/or of a hood compartment cover (31), and/or of a windshield frame (11), and/or of an area (29) adjacent to a window.

14. Motor vehicle according to any one of claims 11 to 13, **characterized in that** the capacitive sensor (22 - 25) for detection of the obstruction situation is arranged between a sealing section and/or a trim part and its support.

15. Motor vehicle according to any one of claims 11 to 14, **characterized in that** the capacitive sensor (22 - 25) is provided as a film-like sensor, with electrodes (32) being arranged on a sheet material.

16. Motor vehicle according to claim 15, **characterized in that** air is provided as the dielectric of the capacitive sensor (22 - 25).

17. Motor vehicle according to any one of claims 11 to 16, **characterized in that** the capacitive sensor (22 - 25) is connected to an automatically readjusting threshold switch (37).

18. Motor vehicle according to any one of claims 1 to 17, **characterized in that** the sensor system comprises at least one sensor (38) for sensing a current drawn by a hood drive (6), which sensor (38) is connected to an evaluating unit, by means of which an obstruction situation is detectable by a comparison of a present current profile with a characteristic change in the current profile or with mathematically determined obstruction characteristics.

19. Motor vehicle according to any one of claims 2 to 18, **characterized in that** the safety mode (S9) is started when a malfunction has been detected in the optical sensor system (8).

20. Motor vehicle according to any one of claims 1 to 19, **characterized in that** in a normal mode (S3), when the sensor system has been recognized as functional, a waiting time is started after detection of an obstruction situation and of a stop and/or reversal of the hood movement, during which waiting time an inquiry is made as to whether the obstruction situation is still present, and a positive inquiry result starts the safety mode (S9).

21. Motor vehicle according to any one of claims 1 to 20, **characterized in that**, in the safety mode (S9), a processing function (S11) for closing or opening the hood (2) at a reduced speed (v_min) is started, during which an inquiry function (S12) of an evaluating unit checks whether an obstruction situation is present, and a positive inquiry result starts a processing function (S13) for stopping and/or reversing the hood movement.

22. Motor vehicle according to any one of claims 1 to 21, **characterized in that** an inquiry for a malfunction in the detection device (7) or the detection of an obstruction situation is effected after an automatic start (S1) of the hood movement.

23. Motor vehicle according to any one of claims 1 to 22, **characterized in that**, a continuous hood position detection (39) is provided for monitoring the position of the hood (2), wherein the position of a defined element (43, 44, 45) of the hood mechanism (4) is determined by means of an acceleration sensor (40, 41, 42), which measures a present acceleration with respect to the acceleration due to gravity.

24. Motor vehicle according to claim 23, **characterized in that** several acceleration sensors (40, 41, 42) are arranged on elements (43, 44, 45) of the hood mechanism (4) and connected to an evaluating unit (46), which uses signals from the acceleration sensors (40, 41, 42) to compute a relative position that, combined with existing information about the vehicle inclination, yields the present hood position.

25. Motor vehicle according to any one of claims 1 to 24, **characterized in that** the control unit (5) for controlling the hood movement comprises a further acceleration sensor (48) for determining the vehicle inclination.

26. Motor vehicle according to any one of claims 1 to 25, **characterized in that** the sensor system is part of a rain sensor.

## Revendications

1. Véhicule automobile, comprenant une capote mobile (2), une unité de commande (5) destinée à commander le mouvement de la capote, et un dispositif de détection (7), qui présente un système de capteurs (8, 38, 49) pour la détection d'un engagement dans un espace de mouvement d'un mécanisme de capote (4), ledit système de capteurs (8, 38, 49) comprenant des capteurs (9, 10, 14, 15, 22 - 25, 38) qui mesurent selon différents principes de mesure et ladite unité de commande (5) répondant à la détection d'une perturbation du dispositif de détection (7), ou à la détection d'une situation de coincement, en commandant le mouvement de la capote dans une mode sécurisé (S9), **caractérisé en ce que**
l'unité de commande (5) prévoit trois réponses possibles pour le mouvement de la capote dans le mode sécurisé (S9), qui consistent en continuant le mouvement de la capote à une vitesse réduite (v_min), ou en arrêtant ou en invertissant le sens de mouvement de la capote, et qu'elle exécute une de ces trois réponses dans une manière adaptée à la situation de coincement détectée et à la situation d'opération présente.

2. Véhicule automobile selon la revendication 1, **caractérisé en ce que** quelques-uns des capteurs (9, 10, 14, 15) constituent un système de capteurs optique (8).

3. Véhicule automobile selon la revendication 2, **caractérisé en ce que** le système de capteurs optique (8) est réalisé avec un dispositif optique émetteur et récepteur de lumière (14, 15), qui forme au moins un plan de lumière (16 - 21) autour de l'espace de mouvement de la capote (2) et qui utilise des moyens de détection de réflexions pour détecter un engagement dans ledit plan de lumière.

4. Véhicule automobile selon la revendication 3, **caractérisé en ce que** la source de lumière pour le dispositif émetteur et récepteur de lumière (14, 15) est un laser.

5. Véhicule automobile selon la revendication 3 ou 4, **caractérisé en ce que** l'on prévoit une unité d'évaluation qui calcule une distance et/ou un angle d'engagement dans le plan de lumière (16-21) à partir de signaux de sortie des moyens de détection de réflexions.

6. Véhicule automobile selon l'une quelconque des revendications 3 à 5, **caractérisé en ce qu'**au moins un plan de lumière (19, 20, 21) est constitué sur un côté du mécanisme de capote (4) tourné vers la cabine (12) du véhicule.

7. Véhicule automobile selon l'une quelconque des revendications 3 à 6, **caractérisé en ce qu'**au moins un plan de lumière (16, 17, 18) est constitué sur un côté du mécanisme de capote (4) tourné vers l'extérieur du véhicule.

8. Véhicule automobile selon l'une quelconque des revendications 2 à 7, **caractérisé en ce que** le système de capteurs optique (8) est réalisé avec au moins un capteur d'image (9, 10), notamment une caméra, qui contrôle l'espace de mouvement du mécanisme de capote (4).

9. Véhicule automobile selon la revendication 8, **caractérisé en ce qu'**un engagement dans l'espace de mouvement du mécanisme de capote (4) est détecté par une unité d'évaluation au moyen d'une évaluation d'image de différence.

10. Véhicule automobile selon la revendication 8 ou 9, **caractérisé en ce que** l'au moins un capteur d'image (9, 10) est en plus associé à un dispositif pour le contrôle de l'intérieur du véhicule (12) et/ou de la position des occupants du véhicule.

11. Véhicule automobile selon l'une quelconque des revendications 1 à 10, **caractérisé en ce que** le système de capteurs comprend au moins un capteur capacitif (22 - 25).

12. Véhicule automobile selon la revendication 11, **caractérisé en ce qu'**une situation de coincement est détectée lors de la réponse de plusieurs capteurs capacitifs sélectionnés (22 - 25), notamment d'un capteur ou de deux capteurs avoisinants.

13. Véhicule automobile selon la revendication 11 ou 12, **caractérisé en ce qu'**au moins un capteur capacitif (22 - 25) est disposé de manière à détecter une situation de coincement dans la zone d'éléments (26, 27) reliés entre eux de manière articulée de la timonerie d'une capote, et/ou d'un étrier de tension (28), et/ou d'un couvercle du logement de capote (31), et/ou sur un cadre de pare-brise (11), et/ou dans une zone (29) avoisinant une fenêtre.

14. Véhicule automobile selon l'une quelconque des revendications 11 à 13, **caractérisé en ce que** le capteur capacitif (22 - 25) destiné pour la détection de la situation de coincement est disposé entre un profil d'étanchéité et/ou un élément de revêtement et le support de celui-ci.

15. Véhicule automobile selon l'une quelconque des revendications 11 à 14, **caractérisé en ce que** le capteur capacitif (22 - 25) est réalisé en feuille, avec des électrodes (32) disposées sur un matériau en feuille.

16. Véhicule automobile selon la revendication 15, **caractérisé en ce que** l'air constitue le diélectrique du capteur capacitif (22 - 25).

17. Véhicule automobile selon l'une quelconque des revendications 11 à 16, **caractérisé en ce que** le capteur capacitif (22 - 25) est relié à un interrupteur de valeur de seuil (37) à réajustement automatique.

18. Véhicule automobile selon l'une quelconque des revendications 1 à 17, **caractérisé en ce que** le système de capteurs comprend au moins un capteur (38) destiné à détecter l'absorption de courant d'un entraînement (6) pour la capote, ledit capteur (38) étant relié à une unité d'évaluation qui permet la détection d'une situation de coincement par comparaison d'un parcours de courant actuel avec un changement caractéristique du parcours de courant ou avec des caractéristiques de coincement mathématiquement déterminées.

19. Véhicule automobile selon l'une quelconque des revendications 2 à 18, **caractérisé en ce que** le mode sécurisé (S9) est lancé lors de la détection d'une perturbation du système de capteurs optique (8).

20. Véhicule automobile selon l'une quelconque des revendications 1 à 19, **caractérisé en ce que** dans un mode normal (S3), et ayant identifié le fonctionnement du système de capteurs, un temps d'attente commence après la détection d'une situation de coincement et d'un arrêt et/ou d'une inversion du sens de mouvement de la capote, pendant lequel temps une interrogation est effectuée pour déterminer si la situation de coincement est toujours présente, et un résultat positif d'interrogation lance le mode sécurisé (S9).

21. Véhicule automobile selon l'une quelconque des revendications 1 à 20, **caractérisé en ce que** une fonction de traitement (S11) pour fermer ou ouvrir la capote (2) à une vitesse réduite (v_min) est lancée dans le mode sécurisé (S9), pendant laquelle une fonction d'interrogation (S12) d'une unité d'évaluation vérifie si une situation de coincement est présente, et un résultat positif d'interrogation lance une fonction de traitement (S13) pour arrêter le mouvement de la capote et/ou invertir le sens de mouvement de la capote.

22. Véhicule automobile selon l'une quelconque des revendications 1 à 21, **caractérisé en ce qu'**une interrogation d'une perturbation du dispositif de détection (7) ou la détection d'une situation de coincement est effectuée après un lancement automatique (S1) du mouvement de la capote.

23. Véhicule automobile selon l'une quelconque des revendications 1 à 22, **caractérisé en ce qu'**une détection continue (39) de la position de la capote est prévue pour contrôler la position de la capote (2), pendant laquelle détection la position d'un élément défini (43, 44, 45) du mécanisme de capote (4) est déterminée au moyen d'un capteur d'accélération (40, 41, 42), qui mesure une accélération actuelle par rapport à l'accélération de chute.

24. Véhicule automobile selon la revendication 23, **caractérisé en ce que** plusieurs capteurs d'accélération (40, 41, 42) sont disposés sur des éléments (43, 44, 45) du mécanisme de capote (4) et reliés à une unité d'évaluation (46), qui calcule, à partir des signaux des capteurs d'accélération (40, 41, 42), une position relative qui, ensemble avec une information présente concernant l'inclinaison du véhicule, donne la position actuelle de la capote.

25. Véhicule automobile selon l'une quelconque des revendications 1 à 24, **caractérisé en ce que** l'unité de commande (5) destiné à commander le mouvement de la capote comprend un capteur d'accélération additionnel (48) destiné à déterminer l'inclinaison du véhicule.

26. Véhicule automobile selon l'une quelconque des revendications 1 à 25, **caractérisé en ce que** le système de capteurs fait partie d'un capteur
